# EUROPEAN PATENT APPLICATION

(11) **EP 1 717 113 A2**
(43) Date of publication of application: **02.11.2006**
(21) Application number: 06004234.8
(22) Date of filing: 02.03.2006
(51) Int. Cl.: B60R 22/34

(54) **Seatbelt retractor and seatbelt device equipped with the seatbelt retractor**

(30) Priority: 26.04.2005 JP 2005127943
(71) Applicant: TAKATA CORPORATION, Minato-ku, Tokyo 106-8510 (JP)
(72) Inventor: Hiramatsu, Koji, Minato-ku Tokyo 106-8510 (JP)
(74) Representative: Banzer, Hans-Jörg

(57) **Abstract**

In order to provide a small-size seatbelt retractor in which a limit load applied to a seatbelt can be set more flexibly in accordance with the conditions of an emergency situation, a supporting shaft portion (4a) of a spool (4) is provided with a second energy-absorbing mechanism (41), which is concentric with the spool (4). In an emergency situation, a clutch pawl (46) engages to ratchet teeth (43a) of a first energy-absorber support member (43), and the first energy-absorber support member (43) rotates in a belt-withdrawing direction together with the spool (4). On the other hand, a second energy-absorber support member (44) is locked by a lever (50) of an operation controller (48), such that the second energy-absorber support member (44) is non-rotatable. Thus, the energy absorber (42) becomes deformed, whereby the second energy-absorbing mechanism (41) absorbs the impact energy together with the torsion bar (7).

## Description

The present invention relates to seatbelt retractors for retracting and withdrawing seatbelts. In particular, the present invention relates to a seatbelt retractor having an energy-absorbing mechanism (which will also be referred to as an EA mechanism hereinafter) and to a seatbelt device equipped with such a seatbelt retractor. Specifically, in a case where large deceleration acts on a vehicle due to, for example, a collision, if a seatbelt is worn by a vehicle occupant in such an emergency situation, the seatbelt is held back from being withdrawn. In this case, an energy absorber of the energy-absorbing mechanism, such as a torsion bar, is twisted so that a load applied to the seatbelt is limited, whereby impact energy applied to the vehicle occupant is absorbed and alleviated.

Conventional seatbelt devices provided in vehicles, such as automobiles, restrain a vehicle occupant with a seatbelt in an emergency situation in order to prevent and protect the vehicle occupant from falling out of a seat.

Such seatbelt devices are equipped with a seatbelt retractor which is capable of retracting a seatbelt. In such a seatbelt retractor, the seatbelt is retracted by a spool when the seatbelt is not worn by a vehicle occupant. On the other hand, when the seatbelt is to be worn by a vehicle occupant, the seatbelt is withdrawn from the spool. In an emergency situation, a lock mechanism provided in the seatbelt retractor is activated so that the spool is prevented from rotating in the belt-withdrawing direction. This prevents the seatbelt from being withdrawn. Accordingly, in an emergency situation, the seatbelt securely restrains the vehicle occupant in order to protect the vehicle occupant.

According to the seatbelt retractor of the seatbelt device of such a conventional example, when the seatbelt restrains the vehicle occupant in an emergency situation, such as a collision, the vehicle occupant moves forward in response to a large inertia force since a large deceleration occurs in the vehicle. For this reason, a large load is applied to the seatbelt, whereby the vehicle occupant receives large impact from the seatbelt. Although this impact applied to the vehicle occupant is not particularly a significant problem, it is desirable that the impact is limited.

Therefore, conventional seatbelt retractors are provided with a torsion bar. Specifically, if an emergency arises in a state where a seatbelt is worn by a vehicle occupant, the torsion bar limits the load acting on the seatbelt so that the impact energy can be absorbed and alleviated (for example, see the Japanese Unexamined Patent Application Publication No. 2001-58559).

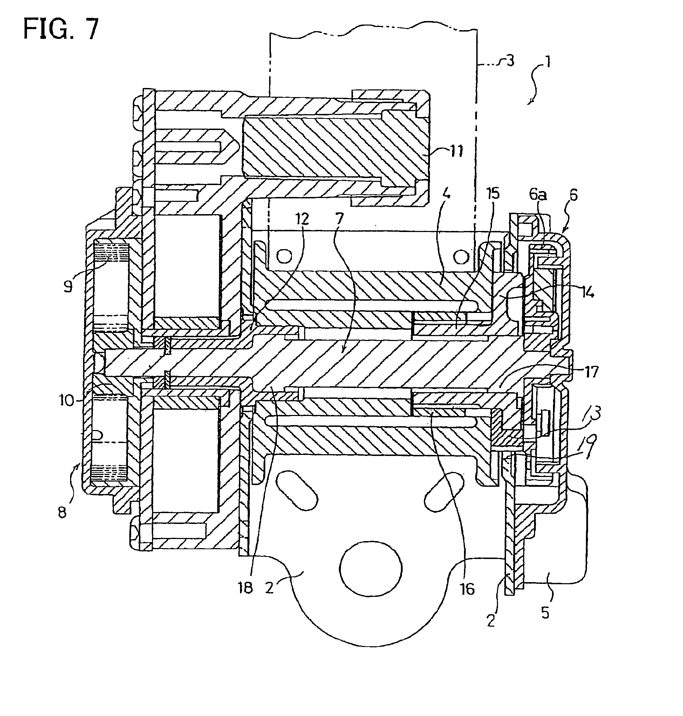

Fig. 7 is a vertical sectional view of an example of a seatbelt retractor disclosed in the Japanese Unexamined Patent Application Publication No. 2001-58559. In the drawing, reference numeral 1 indicates a seatbelt retractor. Reference numeral 2 indicates a U-shaped frame. Reference numeral 3 indicates a seatbelt. Reference numeral 4 indicates a spool which is rotatably supported between opposite side walls of the U-shaped frame 2 and which retracts the seatbelt 3. Reference numeral 5 indicates deceleration detecting mechanism which is activated when it detects large deceleration of a vehicle in an emergency situation. Reference numeral 6 indicates lock mechanism which is activated by the deceleration detecting mechanism 5 and prevents the spool 4 from rotating in at least the belt-withdrawing direction. Reference numeral 7 indicates a torsion bar which is loosely fitted in the center of the spool 4 and extends axially through the spool 4. The torsion bar 7 links the spool 4 and the lock mechanism 6 in a rotatable fashion. Reference numeral 8 indicates a spring mechanism which utilizes a spring force of a spiral spring 9 in order to constantly bias the spool 4 in the belt-retracting direction via a bush 10. Reference numeral 11 indicates a pretensioner which is activated in an emergency situation and generates a belt-retracting torque. Reference numeral 12 indicates a bush for transmitting the belt-retracting torque from the pretensioner 11 to the spool 4.

The lock mechanism 6 is rotatable integrally with a first torque transmission shaft 17 of the torsion bar 7, and is provided with a locking base 14 (corresponding to a locking member of the present invention) which holds a pawl 13 in an oscillating fashion. Normally, the lock mechanism 6 is rotatable integrally with the torsion bar 7. On the other hand, the lock mechanism 6 is provided with a lock gear 6a for preventing the locking base 14 from rotating in the belt-withdrawing direction in an emergency situation. Specifically, in an emergency situation, the lock mechanism 6 is stopped in response to the activation of the deceleration detecting mechanism 5 so that a relative rotational difference is generated between the lock mechanism 6 and the torsion bar 7. The lock gear 6a then allows the pawl 13 to engage with internal teeth 19 provided on a side wall of the frame 2 so as to prevent the locking base 14 from rotating in the belt-withdrawing direction. The locking base 14 has an external-thread shaft portion 15. The external-thread shaft portion 15 and a nut-like stopper member 16, which is rotatable integrally with the spool 4, are screwed together.

Furthermore, the torsion bar 7 has a first torque transmission shaft 17, which is engaged with the locking base 14 in a relatively non-rotatable manner, and a second torque transmission shaft 18, which is engaged with the spool 4 in a relatively non-rotatable manner.

Due to the spring force of the spring mechanism 8, the spool 4 is constantly biased in the belt-retracting direction via the bush 10, the torsion bar 7, the second torque transmission shaft 18 of the torsion bar 7, and the bush 12. Moreover, when the pretensioner 11 is in an activated state, the belt-retracting torque generated by the pretensioner 11 is transmitted to the spool 4 via the bush 12, whereby the spool 4 retracts the seatbelt 3 by a predetermined amount.

According to such a conventional seatbelt retractor 1, when the seatbelt 3 is not worn by the vehicle occupant, the seatbelt 3 is completely retracted due to the biasing force of the spring mechanism 8. When the seatbelt 3 is withdrawn at normal speed so as to be worn by the vehicle occupant, the spool 4 is rotated in the belt-withdrawing direction so that the seatbelt 3 can be withdrawn smoothly. After inserting and fastening a tongue, not shown, which is slidably provided on the seatbelt 3, to a buckle, not shown, which is fixed to the vehicle body, the excess withdrawn portion of the seatbelt 3 is retracted by the spool 4 due to the biasing force of the spring mechanism 8. As a result, the seatbelt 3 fits onto the vehicle occupant without giving the occupant a feeling of tightness.

In an emergency situation, the belt-retracting torque generated by the pretensioner 11 is transmitted to the spool 4. Thus, the spool 4 retracts the seatbelt 3 by a predetermined amount so that the vehicle occupant can be securely restrained. On the other hand, the deceleration detecting mechanism 5 is activated in response to a large deceleration of a vehicle generated in an emergency situation, which in turn activates the lock mechanism 6. In other words, when the deceleration detecting mechanism 5 is activated, the lock gear 6a is held back from rotating in the belt-withdrawing direction and the pawl 13 of the lock mechanism 6 is rotated so as to become engaged to the internal teeth 19 on the side wall of the frame 2. Thus, the locking base 14 is held back from rotating in the belt-withdrawing direction. This twists the torsion bar 7 such that only the spool 4 rotates relatively with respect to the locking base 14 in the belt-withdrawing direction. Subsequently, the spool 4 continues to rotate in the belt-withdrawing direction while twisting the torsion bar 7. Due to the torsion torque of the torsion bar 7, a load applied to the seatbelt 3 is limited, whereby an impact applied to the vehicle occupant is absorbed and alleviated.

Since the spool 4 rotates relatively with respect to the locking base 14, the stopper member 16 rotating integrally with the spool 4 is rotated relatively with respect to the external-thread shaft portion 15. Thus, the stopper member 16 is shifted towards the locking base 14. When the stopper member 16 abuts the locking base 14, the stopper member 16 is stopped from rotating any further, whereby the spool 4 is held back from rotating. As a result, the torsion bar 7 stops twisting. Accordingly, the seatbelt 3 is prevented from being withdrawn so that the vehicle occupant is securely restrained by the seatbelt 3. Moreover, the maximum torsion of the torsion bar 7 is limited so that breakages caused by the torsional deformation of the torsion bar 7 can be prevented.

Furthermore, in this conventional seatbelt retractor 1, when the seatbelt 3 is rapidly withdrawn, the locking base 14 of the lock mechanism 6 is similarly rotated in the belt-withdrawing direction relatively with respect to the lock gear 6a. Similar to the above, the pawl 13 of the lock mechanism 6 becomes engaged to the internal teeth 19 on the side wall of the frame 2 so that the locking base 14 is held back from rotating. For this reason, the spool 4 is prevented from rotating in the belt-withdrawing direction via the torsion bar 7 so that the seatbelt 3 is prevented from being withdrawn.

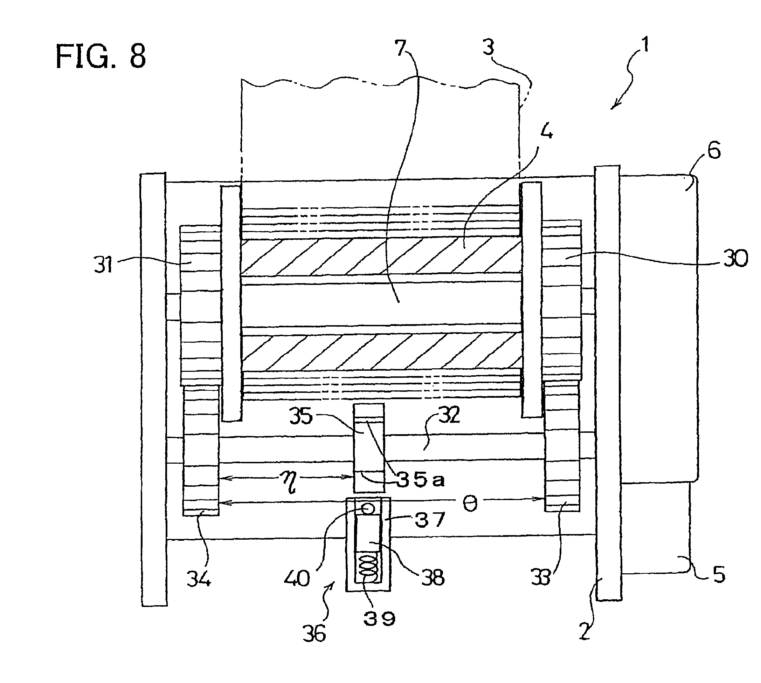

Furthermore, the Japanese Unexamined Patent Application Publication No. 2001-58559 also discloses a seatbelt retractor 1 in which the limit load is switchable. Specifically, referring to Fig. 8, a lock member 38 is normally prevented from flying out of a cylinder member 37 by a lock pin 40 of an EA load-switching mechanism 36. When the pretensioner is activated in response to a strong collision, the locking base is prevented from rotating in the belt-withdrawing direction, whereby a gear 30 provided in the locking base is also prevented from rotating in the same direction. For this reason, a gear 33, which is constantly meshed with the gear 30, is also prevented from rotating. Because the seatbelt 3 is pulled by an inertia force of the vehicle occupant, the spool 4 is rotated further in the belt-withdrawing direction. Thus, a gear 31, which is rotatable integrally with the spool 4, is rotated in the same direction, and moreover, a gear 34, which is constantly meshed with the gear 31, is also rotated.

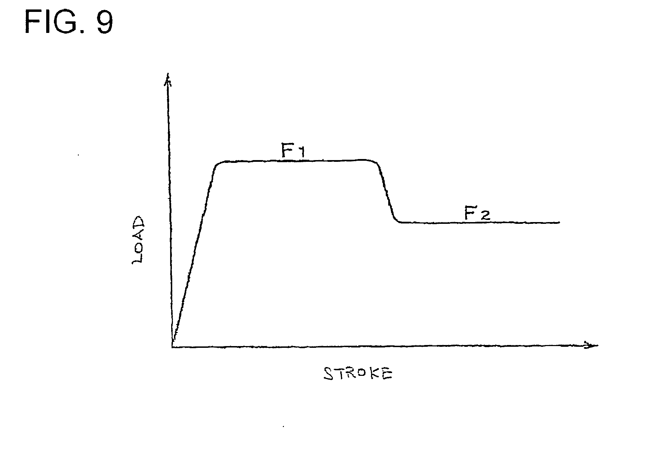

On the other hand, in an initial stage just after such a strong collision, the lock pin 40 is pushed outward by exhaust gas from the pretensioner so that the lock member 38 moves out of the cylinder member 37 due to the spring force of a spring 39. Then, a ratchet claw 35a of a lock gear 35 becomes engaged to the lock member 38, such that the lock gear 35 is prevented from rotating in the belt-withdrawing direction. Consequently, a portion of a second torsion bar 32 having a length η is twisted, which is shorter than the overall length θ of the second torsion bar 32. Due to the torsion in the first torsion bar 7 and the torsion in the η portion of the second torsion bar 32, an EA operation by an EA mechanism is started. In this case, an FL load F₁ is relatively large, as shown in Fig. 9. In a subsequent stage following the initial stage, the η portion of the second torsion bar 32 breaks after being twisted by a predetermined amount. After the breakage of the second torsion bar 32, the EA operation is performed solely by the torsion of the first torsion bar 7. In this case, an FL load F₂ is relatively smaller than the FL load F₁ in the initial stage, as shown in Fig. 9. Accordingly, the FL load is switchable, such that the limit load applied to the seatbelt can be set flexibly in accordance with restraining conditions, such as an airbag, for a vehicle occupant under an emergency situation.

Other types of conventional EA mechanisms may include an EA mechanism in which a wire provided on a locking base is operated by an engagement pin provided on a spool (for example, see the Japanese Unexamined Patent Application Publication No. 2002-53007); an EA mechanism in which a strap-like plate having its one end provided on a spool is forcibly deformable by a guide groove provided in a locking base (for example, see the Japanese Unexamined Patent Application Publication No. 2000-85527); an EA mechanism in which a cylindrical member provided in a spool is subject to plastic deformation by a latching portion provided in a locking base (for example, see the Japanese Unexamined Patent Application Publication No. 2002-53008); an EA mechanism in which a U-shaped flat material whose one end is provided on a locking base and whose other end is engaged to a spool is deformable (for example, see the Japanese Unexamined Patent Application Publication No. 10-258702); an EA mechanism in which a shear pin disposed between a spool and a locking base is sheared during a rotationally locked state of the locking base under an emergency situation (for example, see the Japanese Unexamined Patent Application Publication No. 2001-106025); and an EA mechanism in which a portion of a spool is cut with a cutter blade provided on a locking base (for example, see the Japanese Unexamined Patent Application Publication No. 2001-106025).

However, according to the seatbelt retractor 1 disclosed in the Japanese Unexamined Patent Application Publication No. 2001-58559, even though the limit load can be set in accordance with restraining conditions of the vehicle occupant, only one limit load is set for an initial stage just after a collision. Although impact energy applied to the vehicle occupant in this initial stage after a collision is large, the impact energy is different depending on the physical size of the vehicle occupant, the position of a seat, the speed during a collision, the acceleration during a collision, and the type of collision. With respect to such large impact energy of different values in the initial stage, the vehicle occupant can be restrained more effectively and properly by setting a plurality of detailed limit loads in accordance with the conditions under an emergency situation rather than setting only a single limit load.

Therefore, the Inventors of the present invention have previously made a patent application for a seatbelt retractor in which the limit load applied to a seatbelt can be set more flexibly in accordance with the conditions under an emergency situation (Japanese Patent Application No. 2004-316142).

In the seatbelt retractor of this application, one rotary shaft is disposed in parallel to the spool and is provided above the spool. The rotary shaft is provided with two EA mechanisms having different EA characteristics. One or each of the EA mechanisms is activated in accordance with the conditions under an emergency situation. Thus, the two EA mechanisms are selectively activated so that the limit load applied to the seatbelt can be set more flexibly in accordance with the conditions under an emergency situation.

However, in the seatbelt retractor of this application, since the single additional rotary shaft disposed above the spool is positioned distant from a rotary shaft of the spool, the seatbelt retractor is relatively large in size in the vertical direction thereof.

Recently, there has been an increased demand in small-size seatbelt retractors in order to increase the usable space inside vehicle cabins, if possible, to a maximum extent.

In view of the circumstances described above, it is an object of the present invention to provide a small-size seatbelt retractor in which a limit load applied to a seatbelt can be set more flexibly in accordance with the conditions under an emergency situation. Furthermore, it is another object of the present invention to provide a seatbelt device equipped with such a seatbelt retractor.

According to the present invention, this object is achieved by a seatbelt retractor according to claim 1 and a seatbelt device according to claim 8. The dependent claims define preferred or advantageous embodiments.

A seatbelt retractor according to the present invention includes a spool which retracts a seatbelt; and a lock mechanism having a locking member, the locking member under normal conditions being rotatable together with the spool in response to a rotation of the spool transmitted to the locking member via a first seatbelt-load-limiting mechanism, the locking member being prevented from rotating in a seatbelt-withdrawing direction in an emergency situation. A load applied to the seatbelt is limited by the first seatbelt-load-limiting mechanism when the locking member is prevented from rotating in the seatbelt-withdrawing direction and the spool is rotated relatively with respect to the locking member in the seatbelt-withdrawing direction. A second seatbelt-load-limiting mechanism is disposed concentrically with the spool, the second seatbelt-load-limiting mechanism changing the limit load of the seatbelt under the emergency situation based on, for example, conditional information on a state in the emergency situation, the conditional information including a physical size of a vehicle occupant, a position of a seat, the speed during a collision, the acceleration during a collision, and the type of collision.

Furthermore, the first seatbelt-load-limiting mechanism may include a torsion bar disposed between the spool and the locking member.

Furthermore, the second seatbelt-load-limiting mechanism may include a first energy-absorber support member which is rotatable integrally with the spool and is disposed concentrically with the spool; a second energy-absorber support member disposed concentrically with the first energy-absorber support member; and an energy absorber disposed between the first energy-absorber support member and the second energy-absorber support member.

Furthermore, a seatbelt device according to the present invention includes the seatbelt retractor according to any one embodiment of the invention, the seatbelt retractor retracting a seatbelt; a tongue slidably supported by the seatbelt withdrawn from the seatbelt retractor; and a buckle engageable to and releasable from the tongue. The seatbelt retractor prevents the seatbelt from being withdrawn under an emergency situation in order to restrain a vehicle occupant.

According to the seatbelt retractor and the seatbelt device equipped with the seatbelt device of the present invention, the limit load of the seatbelt under an emergency situation is changed based on, for example, preliminary information (such as the weight of a vehicle occupant and the position of a seat), collision-predicting information for predicting a collision, and information indicating the degree of the collision (such as the collision speed, the acceleration during the collision, and the type of collision). Thus, the limit load of the seatbelt during a collision can be set more flexibly in accordance with the conditions encountered during the collision and the information in the emergency situation, such as the size of the vehicle occupant. Accordingly, in the case of a collision, the vehicle occupant can be restrained and protected in a more effective manner.

Furthermore, since the second seatbelt-load-limiting mechanism is disposed concentrically with the spool, the seatbelt retractor can be made compact in size in the vertical direction. Thus, the usable space inside the vehicle cabin can be increased.

Embodiments of the present invention will now be described with reference to the drawings.
Fig. 1 partially illustrates a seatbelt retractor according to an embodiment of the present invention.
Fig. 2 is a cross-sectional view taken along line II-II in Fig. 1.
Fig. 3 is an enlarged partial view of the seatbelt retractor shown in Fig. 1.
Fig. 4 is a block diagram for controlling a second EA mechanism of the seatbelt retractor shown in Fig. 1.
Figs. 5(a) to 5(e) schematically illustrate an EA operation of the seatbelt retractor shown in Fig. 1.
Fig. 6 schematically illustrates an example of a seatbelt device to which the seatbelt retractor shown in Fig. 1 is applied.
Fig. 7 is a vertical sectional view illustrating a conventional example of a seatbelt retractor equipped with a torsion bar.
Fig. 8 schematically illustrates another conventional example of a seatbelt retractor equipped with a torsion bar.
Fig. 9 illustrates FL load characteristics according to the conventional example shown in Fig. 8.

In each of the embodiments below, the components that are the same as those in the prior embodiment or in the seatbelt retractor 1 of the conventional example shown in Fig. 7 are given the same reference numerals, and detailed descriptions of those components will be omitted.

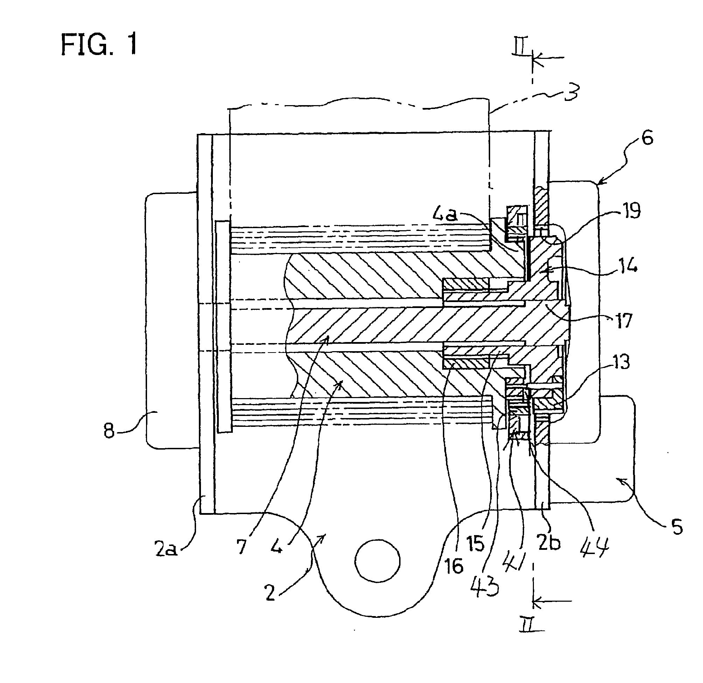

Referring to Fig. 1, similar to the seatbelt retractor 1 of the conventional example shown in Fig. 7, a seatbelt retractor 1 in this embodiment includes a U-shaped frame 2, a seatbelt 3, a spool 4 for retracting the seatbelt 3, and a torsion bar 7 (corresponding to a first EA mechanism; a first seatbelt-load-limiting mechanism according to the present invention). Moreover, although not shown in the drawing in detail, similar to the seatbelt retractor 1 of the conventional example shown in Fig. 7, the seatbelt retractor 1 according to this embodiment also includes deceleration detecting mechanism 5, lock mechanism 6, spring mechanism 8, a pretensioner equivalent to the pretensioner 11 mentioned above, a bush equivalent to the bush 12 mentioned above for transmitting a belt-retracting torque from the pretensioner 11 to the spool 4.

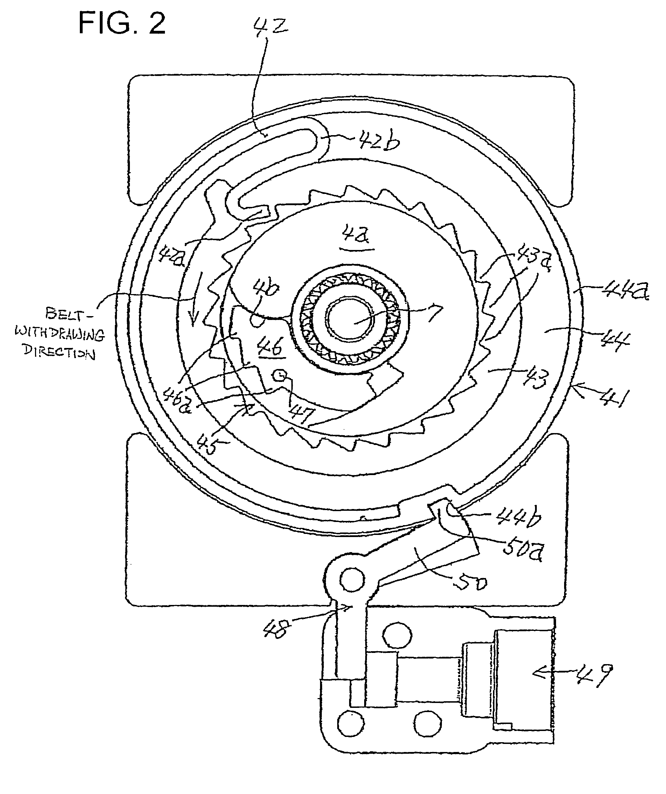

Furthermore, the seatbelt retractor 1 according to this embodiment is provided with a second EA mechanism 41 (corresponding to a second seatbelt-load-limiting mechanism according to the present invention). The second EA mechanism 41 is concentric with the spool 4 and is disposed around an outer periphery of a supporting shaft portion 4a extending from a side of the spool 4 adjacent to a locking base 14. Referring to Fig. 2, the second EA mechanism 41 includes an energy absorber 42; a ring-shaped, first energy-absorber support member 43 supported by the supporting shaft portion 4a of the spool 4 in a relatively rotatable manner and having internal ratchet teeth 43a; and a second energy-absorber support member 44 supported by the first energy-absorber support member 43 in a relatively rotatable manner.

The energy absorber 42 is composed of a strap-like plate having a predetermined thickness and a predetermined width, and is substantially C-shaped. Alternatively, the energy absorber 42 may be composed of a linear material. A first end of the energy absorber 42 defines a first support portion 42a securely supported by the first energy-absorber support member 43, and a second end of the energy absorber 42 is slidably supported by the second energy-absorber support member 44. Furthermore, a portion of the energy absorber 42 adjacent to the first support portion 42a is folded back so as to define a U-shaped portion 42b.

The second energy-absorber support member 44 is disc-shaped, and has an annular flange 44a along the outer periphery thereof. The first support portion 42a of the energy absorber 42 is securely supported by the first energy-absorber support member 43. A section of the energy absorber 42 extending from the U-shaped portion 42b to the second end is in contact with an inner periphery surface of the flange 44a of the second energy-absorber support member 44.

The supporting shaft portion 4a of the spool 4 and the first energy-absorber support member 43 have a clutch mechanism 45 disposed therebetween, such that the clutch mechanism 45 rotatably links the supporting shaft portion 4a and the first energy-absorber support member 43 with respect to the belt-withdrawing direction. The clutch mechanism 45 is arc-shaped and is provided with a clutch pawl 46 having a predetermined number of latching claws 46a engageable to the ratchet teeth 43a of the first energy-absorber support member 43. The clutch pawl 46 is slidably supported by a supporting surface 4b of the supporting shaft portion 4a. The supporting surface 4b is given a predetermined curve.

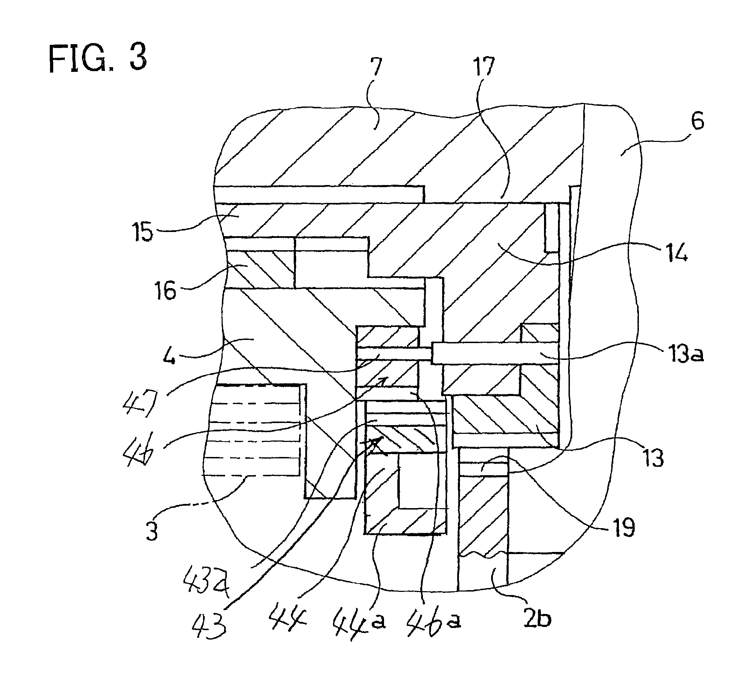

Referring to Fig. 3, the clutch pawl 46 is integrally rotatable around a shear pin 47, which is concentrically integrated with a rotary shaft 13a of the pawl 13 of the lock mechanism 6. When the pawl 13 rotates in an emergency situation such that the locking base 14 is prevented from rotating in the belt-withdrawing direction, the clutch pawl 46 is rotated in response to the rotation of the pawl 13. As a result, the latching claws 46a of the clutch pawl 46 become engaged to the ratchet teeth 43a.

As described above, when the deceleration detecting mechanism 5 is activated in an emergency situation, the pawl 13 rotates so as to become engaged to internal teeth 19 provided on a side wall 2b of the frame 2. In this case, the clutch pawl 46 rotates in conjunction with the pawl 13 so that the latching claws 46a become engaged to the ratchet teeth 43a of the first energy-absorber support member 43 in the belt-withdrawing direction, whereby the clutch pawl 46 becomes connected to the clutch mechanism 45. This connection between the clutch pawl 46 and the clutch mechanism 45 allows the spool 4 and the first energy-absorber support member 43 to become rotationally linked with each other at least in the belt-withdrawing direction. Furthermore, when the pawl 13 engages to the internal teeth 19 of the frame 2, the rotation of the locking base 14 in the belt-withdrawing direction becomes locked. On the other hand, the spool 4 rotates further in the belt-withdrawing direction since the seatbelt 3 is pulled by the inertia force of the vehicle occupant. As a result, a large shearing load is applied to the shear pin 47, thereby breaking the shear pin 47.

In other words, when the pawl 13 becomes engaged to the internal teeth 19 of the frame 2 and the latching claws 46a of the clutch pawl 46 become engaged to the ratchet teeth 43a in an emergency situation, the shear pin 47 is sheared. When the shear pin 47 is sheared, the clutch pawl 46 moves relatively with respect to the spool 4 towards the upstream side of the rotation of the spool 4 in the belt-withdrawing direction while the latching claws 46a remain engaged to the ratchet teeth 43a. Subsequently, the clutch pawl 46 is inserted between the supporting surface 4b of the supporting shaft portion 4a of the spool 4 and the first energy-absorber support member 43, whereby the relative movement of the clutch pawl 46 with respect to the spool 4 is stopped. Consequently, the rotational linkage in the belt-withdrawing direction between the spool 4 and the first energy-absorber support member 43 is firmly maintained. Thus, the rotation of the spool 4 in the belt-withdrawing direction is transmitted to the first energy-absorber support member 43 via the clutch pawl 46, whereby the first energy-absorber support member 43 rotates in the belt-withdrawing direction as indicated by an arrow.

Furthermore, referring to Fig. 2, the side wall 2b of the frame 2 is provided with an operation controller 48 for controlling the EA operation of the second EA mechanism 41, and a driving member 49 for driving the operation controller 48. The operation controller 48 includes a lever 50 rotatably supported by the side wall 2b of the frame 2. A front end of the lever 50 is bent by 90° so as to form an engagement projection 50a. Normally, the engagement projection 50a is engaged with an engagement recess 44b provided in the flange 44a of the second energy-absorber support member 44.

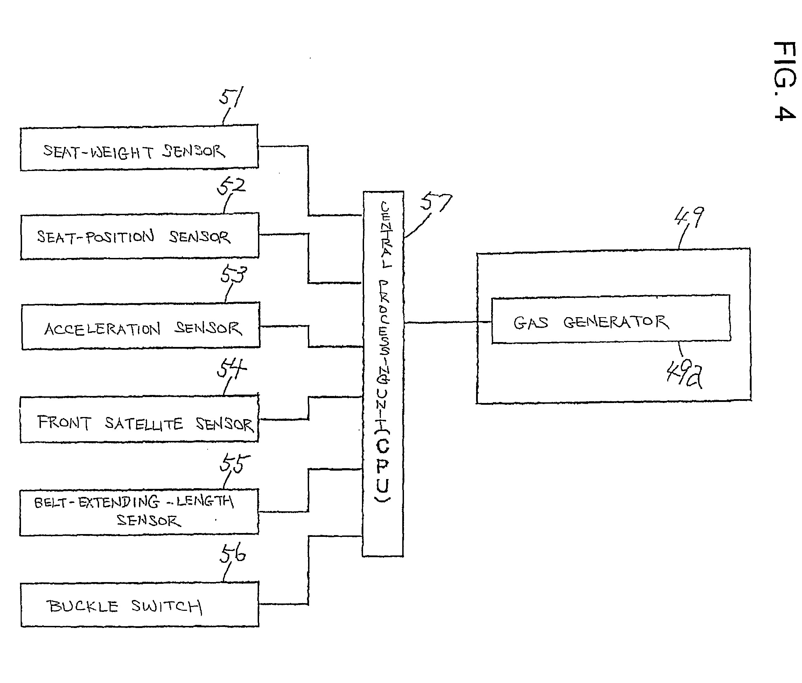

The second EA mechanism 41 defines limit-load setting mechanism according to the present invention. The driving member 49 includes therein a gas generator 49a (not shown in Fig. 2, but shown in Fig. 4). The gas generator is activated in an emergency situation so as to generate reactant gas. The driving member 49 is activated in response to the reactant gas so as to rotate the lever 50 of the operation controller 48 clockwise in Fig. 2, whereby the engagement projection 50a becomes disengaged from the engagement recess 44b.

Referring to Fig. 4, in the second EA mechanism 41 according to this embodiment, the gas generator 49a of the driving member 49 is controlled by a CPU 57 in accordance with conditions under an emergency situation based on output signals from a seat-weight sensor 51, a seat-position sensor 52, an acceleration sensor 53, a front satellite sensor 54, a belt-extending-length sensor 55, and a buckle switch 56.

The operation of the seatbelt retractor 1 according to this embodiment will now be described.

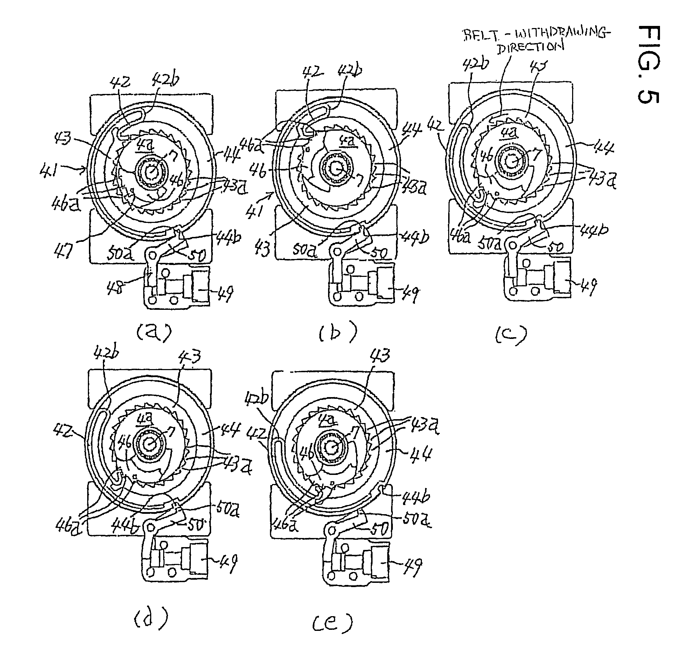

Referring to Fig. 5(a), in an initial state in which the seatbelt retractor 1 is not activated, the latching claws 46a of the clutch pawl 46 are not engaged with the ratchet teeth 43a, such that the clutch mechanism 45 is in an OFF mode (shut off). Consequently, the spool 4 and the first energy-absorber support member 43 are rotationally disconnected from each other. Moreover, the driving member 49 is not activated, and therefore, the engagement projection 50a of the lever 50 of the operation controller 48 is engaged with the engagement recess 44b of the second energy-absorber support member 44. Thus, the second energy-absorber support member 44 is in a non-rotatable state.

Similar to the conventional example, when the pawl 13 rotates in an emergency situation such that the locking base 14 is prevented from rotating in the belt-withdrawing direction, the torsion bar 7 is twisted so that impact energy is absorbed by the torsion bar 7. At the same time, the clutch pawl 46 rotates, as shown in Fig. 5(b), so that the latching claws 46a become engaged to the ratchet teeth 43a. In other words, the clutch mechanism 45 is turned ON such that the spool 4 and the first energy-absorber support member 43 are rotationally connected in the belt-withdrawing direction. In this case, the driving member 49 is in a non-activated state, and the second energy-absorber support member 44 is maintained in a non-rotatable state.

Accordingly, in response to the rotation of the spool 4 in the belt-withdrawing direction due to an inertia force of the vehicle occupant, the rotation of the spool 4 is transmitted to the first energy-absorber support member 43 via the clutch mechanism 45. Consequently, referring to Fig. 5(c), the first energy-absorber support member 43 also rotates in the belt-withdrawing direction (counterclockwise in Fig. 5(c)). Subsequently, the first support portion 42a of the energy absorber 42 is rotated in the same direction together with the first energy-absorber support member 43. Thus, the energy absorber 42 becomes deformed such that the U-shaped portion 42b is gradually shifted towards the second end of the energy absorber 42. Accordingly, the impact energy is absorbed by the second EA mechanism 41. Due to the operations of both the torsion bar 7 and the second EA mechanism 41, the impact energy can be absorbed more effectively.

Based on the output signals from the sensors 51, 52, 53, 54, 55 and the buckle switch 56, when the CPU 57 determines that the impact energy absorption by the second EA mechanism 41 is no longer necessary in view of the conditions under the emergency situation, the CPU 57 activates the gas generator 49a of the driving member 49. Subsequently, referring to Fig. 5(d), the gas generator 49a generates reactant gas. The driving member 49 is driven in response to the reactant gas and thus rotates the lever 50 of the operation controller 48 clockwise. Accordingly, the engagement projection 50a of the lever 50 becomes disengaged from the engagement recess 44b, whereby the second energy-absorber support member 44 becomes rotatable.

Referring to Fig. 5(e), the second energy-absorber support member 44 rotates in the belt-withdrawing direction integrally with the spool 4 and the first energy-absorber support member 43. In this case, the U-shaped portion 42b is not shifted towards the second end of the energy absorber 42, such that the energy absorber 42 is no longer deformed. Consequently, the impact energy absorption by the second EA mechanism 41 is completed, and the impact energy is absorbed solely by the torsion bar 7, whereby the limit load of the seatbelt 3 is changed.

According to the seatbelt retractor 1 of this embodiment, the limit load of the seatbelt 3 under an emergency situation is changed based on, for example, preliminary information (such as the weight of a vehicle occupant and the position of a seat), collision-predicting information for predicting a collision, and information indicating the degree of the collision (such as the collision speed, the acceleration during the collision, and the type of collision). Thus, the limit load of the seatbelt 3 during a collision can be set more flexibly in accordance with the conditions under the collision and the information under the emergency situation, such as the size of the vehicle occupant. Accordingly, in case of a collision, the vehicle occupant can be restrained and protected in a more effective manner.

Furthermore, since the second EA mechanism 41 is disposed concentrically with the spool 4, the seatbelt retractor 1 can be made compact in size in the vertical direction. Thus, the usable space inside the vehicle cabin can be increased.

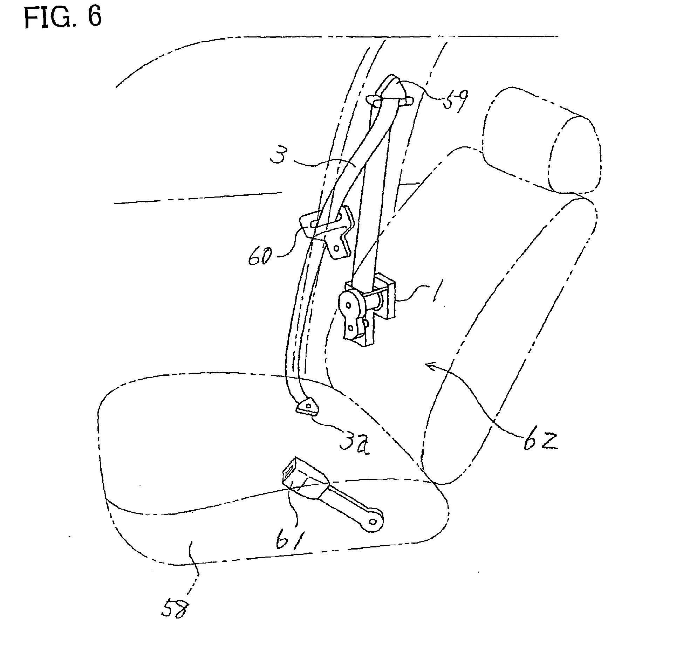

The seatbelt retractor 1 according to the above embodiment is applicable to the seatbelt retractor 1 used in a conventional seatbelt device. Fig. 6 illustrates an example of a seatbelt device 62 to which the seatbelt retractor 1 according to the above embodiment can be applied. In the seatbelt device 62, the seatbelt retractor 1 is fixed to a vehicle body. The seatbelt 3 is withdrawn from the seatbelt retractor 1 and has a belt anchor 3a at its end, the belt anchor 3a being fixed to the floor of the vehicle body or to a vehicle seat 58. The seatbelt device 62 includes a guide anchor 59 for guiding the seatbelt 3 withdrawn from the seatbelt retractor 1 towards the vehicle occupant's shoulders; a tongue 60 which is slidably supported by the seatbelt 3 guided by the guide anchor 59; and a buckle 61 which is fixed to the floor of the vehicle body or to the vehicle seat 58 and is engageable to and releasable from with the tongue 60.

The seatbelt retractor according to the present invention will mainly be used in a seatbelt device provided in a vehicle, such as an automobile. The seatbelt retractor limits a load applied to a seatbelt in an emergency situation, such as a collision, so that impact energy applied to a vehicle occupant can be absorbed and alleviated. Moreover, the seatbelt retractor prevents the seatbelt from being withdrawn in such an emergency situation.

## Claims

1. A seatbelt retractor comprising:
a spool (4) which retracts a seatbelt; and
lock mechanism (6) having a locking member (14), the locking member (14) normally being rotatable together with the spool (4) in response to a rotation of the spool transmitted to the locking member (14) via a first seatbelt-load-limiting mechanism (7), the locking member (14) being held back from rotating in a seatbelt-withdrawing direction under an emergency situation,
wherein a load applied to the seatbelt is limited by the first seatbelt-load-limiting mechanism (7) when the locking member (14) is held back from rotating in the seatbelt-withdrawing direction and the spool (4) is rotated relatively with respect to the locking member (14) in the seatbelt-withdrawing direction, and
wherein a second seatbelt-load-limiting mechanism (41) is disposed concentrically with the spool (4), the second seatbelt-load-limiting mechanism (41) being adapted for changing the limit load of the seatbelt under the emergency situation based on conditional information under the emergency situation, the conditional information including a physical size of a vehicle occupant, a position of a seat, the speed during a collision, the acceleration during a collision, and/or the type of collision.

2. The seatbelt retractor according to Claim 1, wherein the first seatbelt-load-limiting mechanism comprises a torsion bar (7) disposed between the spool (4) and the locking member (14).

3. The seatbelt retractor according to one of Claims 1 and 2, wherein the second seatbelt-load-limiting mechanism (41) comprises a first energy-absorber support member (43) which is rotatable integrally with the spool (4) and is disposed concentrically with the spool (4); a second energy-absorber support member (44) disposed concentrically with the first energy-absorber support member (43); and an energy absorber (42) disposed between the first energy-absorber support member (43) and the second energy-absorber support member (44).

4. The seatbelt retractor according to Claim 3, wherein the second seatbelt-load-limiting mechanism (41) comprises releasable retaining means (44b, 49, 48, 50, 50a) for retaining the second energy-absorber support member (44) at a predetermined angular position.

5. The seatbelt retractor according to Claim 4, wherein the releasable retaining means comprises a recess (44b) on the second energy-absorber support member (44) and a lever (50) engageable therewith.

6. The seatbelt retractor according to Claim 5, wherein the second seatbelt-load-limiting mechanism (41) comprises control means adapted for disengaging said recess (44b) and said lever (50).

7. The seatbelt retractor according to any one of Claims 3-6, wherein the energy absorber (42) is deformable upon a rotation of the first energy-absorber support member (43) relative to the second energy-absorber support member (44).

8. A seatbelt device comprising at least:
the seatbelt retractor (1) according to any one of Claims 1 to 7, the seatbelt retractor retracting a seatbelt (3);
a tongue (60) slidably supported by the seatbelt withdrawn from the seatbelt retractor; and
a buckle (61) engageable to and releasable from the tongue (60),
wherein the seatbelt retractor (1) prevents the seatbelt from being withdrawn under an emergency situation in order to restrain a vehicle occupant.
